# FASCICULE DE BREVET EUROPEEN

(11) **EP 0 459 866 B1**
(45) Date de publication et mention de la délivrance du brevet: **06.10.1993**
(21) Numéro de dépôt: 91401307.3
(22) Date de dépôt: 21.05.1991
(51) Int. Cl.: B60K 15/00

(54) **Dispositif de circuit de ventilation d'air d'un réservoir de carburant**
Einrichtung für den Belüftungskreislauf eines Kraftstofftanks
Device for the ventilation of a fuel tank

(30) Priorité: 23.05.1990 FR 9006434
(43) Date de publication de la demande: 04.12.1991
(73) Titulaire: PAUL JOURNEE S.A., F-92707 Colombes Cédex (FR)
(72) Inventeur: Journee, Maurice, F-60240 Reilly (FR); Hyernard, Pierre-André, F-75015 Paris (FR); Romanek, Christian, F-60430 Noailles (FR)
(74) Mandataire: Lemaire, Marc

(56) Documents cités:
- EP-A- 0 254 631
- EP-A- 0 336 788
- DE-A- 3 605 708
- FR-A- 2 221 938
- FR-A- 2 593 752
- FR-A- 2 606 856

## Description

La présente invention se rapporte à un dispositif de ventilation d'un réservoir de carburant, notamment de véhicule automobile.

Il est connu par le document FR-A-2 593 752 un dispositif comprenant un réservoir de carburant muni d'une pipe de remplissage, un premier conduit, dit conduit de trop-plein, issu de l'intérieur du réservoir et aboutissant au niveau de la partie supérieure de la pipe de remplissage, ce conduit servant à évacuer le carburant en surplus dans ce réservoir en direction de la pipe de remplissage, un deuxième conduit, dit conduit de dégazage, issu du sommet du réservoir et aboutissant également au niveau de la partie supérieure de la pipe de remplissage, ce conduit étant nécessaire pour assurer toutes variations du volume d'air résiduel présent dans la partie supérieure du réservoir et servant à absorber les éventuelles dilatations du carburant, ce conduit de dégazage pouvant être en communication après fermeture de l'orifice de la pipe de remplissage avec un troisième conduit, dit conduit de mise à l'air libre permettant soit d'évacuer vers l'extérieur les éventuelles vapeurs du carburant ou les éventuelles supressions régnant à l'intérieur du réservoir et dues à l'augmentation du volume de ce carburant, soit de pallier à la dépression résultant de l'utilisation de ce carburant dans la marche du véhicule en faisant admettre par le conduit de mise à l'air libre de l'air extérieur.

Il a été proposé par le document EP-A-0 336 788 de prévoir un clapet de sécurité, entre le conduit de dégazage et la mise à l'air libre, visant à interdire la sortie du carburant hors du réservoir, cette sortie pouvant être provoquée par des coups de bélier dans le véhicule ou par une inclinaison excessive du véhicule (en stationnement par exemple) ou un renversement complet de ce véhicule lors d'un accident.

Ce clapet de sécurité consiste en un organe d'obturation apte à fermer la sortie de ce clapet de sécurité, soit par un flotteur actionné par le carburant, soit par des moyens de tarage répondant à une inclinaison du véhicule ou à des accélérations/désaccélérations du véhicule, ces moyens de tarage pouvant être soit une bille logée entre des rampes inclinées, soit un ressort taré.

Comme décrit dans ce document ce clapet de sécurité peut être utilisé en association avec un quatrième conduit, dit conduit de dépollution, comme mieux décrit dans le brevet US-A-4 742 809 et servant à séparer l'air des vapeurs d'essence en condensant ces dernières pour qu'elles puissent retourner sous forme liquide vers le réservoir de carburant tout en autorisant une sortie de l'air sain vers l'extérieur.

La Demanderesse a cependant constaté que ces dispositifs présentaient quelques inconvénients.

Notamment dans le cas où l'organe d'obturation se retrouvait immobilisé en obstruant l'orifice de sortie du clapet de sécurité, les éventuelles surpressions ou dépressions ainsi que les vapeurs d'essence régnant au sein du réservoir ne pouvaient pas être corrigées ou évacuées par l'admission d'air ou la sortie d'air extérieur à travers cet orifice.

En outre, dans le cas où le conduit de dépollution était obstrué par une impureté, les vapeurs d'essence ne pouvaient plus être dirigées vers le dispositif de dépollution et pouvaient engendrer dans le réservoir une surpression qui ne pouvait pas être corrigée.

La présente invention se propose de rémédier aux inconvénients mentionnés ci-dessus en présentant un dispositif de ventilation du réservoir de conception très simple et supprimant tout incident de non fonctionnement.

Selon la présente invention le dispositif de ventilation d'un réservoir de carburant, notamment pour véhicule automobile, comprenant une pipe de remplissage, un conduit de trop-plein, un conduit de dégazage et un conduit de mise à l'air libre, est caractérisé en ce qu'un clapet de sécurité et un conduit de dépollution sont prévus, ainsi qu'un clapet de secours pour pallier les surpressions ou dépressions provoquées par une défaillance du conduit de dépollution afin d'assurer une ventilation du réservoir par l'intermédiaire du conduit de mise à l'air libre.

Grâce à l'invention, le clapet de secours autorise dans tous les cas la mise à l'air libre du réservoir et permet ainsi de pallier les éventuelles surpressions ou dépressions régnant dans ce réservoir.

Les autres caractéristiques et avantages de l'invention vont ressortir maintenant de la description qui va suivre, donnée à titre d'exemple, et en se référant aux dessins annexés sur lesquels:
- la figure 1 montre schématiquement la pipe de remplissage et ses divers conduits ainsi que le clapet de sécurité;
- la figure 2 montre une vue en coupe partielle de la pipe de remplissage en relation avec la figure 1 et munie d'un dispositif de ventilation selon l'invention;
- la figure 3 est une vue de dessus selon la figure 2;
- la figure 4 est une vue en coupe partielle de la pipe de remplissage munie d'un dispositif de ventilation selon une première variante de l'invention partir de la figure 2;
- la figure 5 est une vue de dessus selon la figure 4;
- la figure 6 est une vue en coupe partielle de la pipe de remplissage munie d'un dispositif de ventilation selon une deuxième variante de l'invention à partir de la figure 2 ;
- la figure 7 est une vue de dessus selon la figure 6 ;
- la figure 8 est une vue en coupe partielle de la pipe de remplissage munie d'un dispositif de ventilation selon une troisième variante de l'invention à partir de la figure 2 ;
- la figure 9 est une vue identique à celle de la figure 8 et montrant le dispositif de ventilation dans un état actionné.
- la figure 10 est une vue en coupe partielle de la pipe de remplissage munie d'un dispositif de ventilation selon une quatrième variante de l'invention à partir de la figure 2 ;
- la figure 12 est une vue en coupe partielle de la pipe de remplissage munie d'un dispositif de ventilation selon une cinquième variante de l'invention à partir de la figure 2 ;

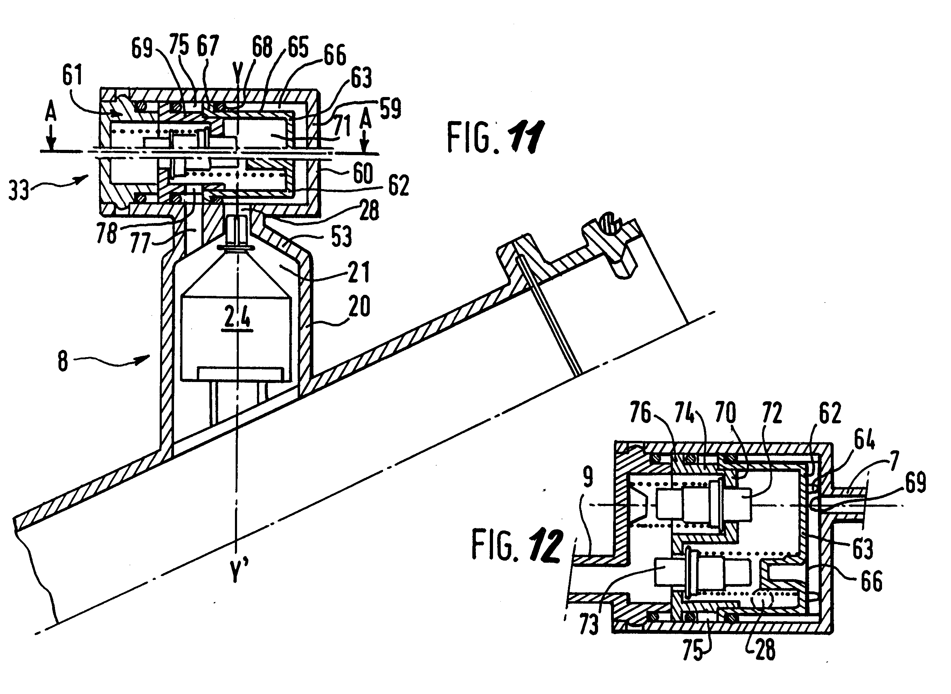

- la figure 12 est une vue en coupe selon la ligne AA de la figure 11.

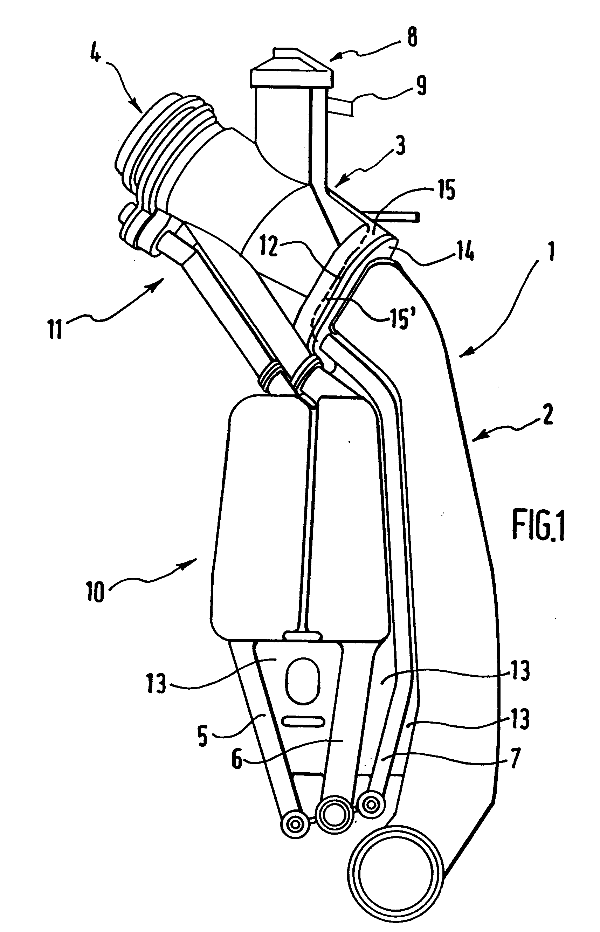

On se réfère maintenant à la figure 1 qui montre un dispositif de remplissage 1 constitué d'une pipe tubulaire de remplissage 2 portant à son extrémité supérieure un sommet de pipe 3, également de forme tubulaire, présentant une ouverture circulaire 4 apte à recevoir un bouchon de fermeture, ladite pipe 2 présentant une extrémité inférieure reliée à un réservoir de carburant (non représenté).

A partir de ce réservoir s'érige un premier conduit 5, dit conduit de trop-plein, aboutissant au niveau de l'extrémité supérieure du sommet de pipe 3, un deuxième conduit 6, dit conduit de dégazage, issu également de ce réservoir et arrivant sensiblement au même niveau que le conduit de trop-plein, un troisième conduit 7, dit conduit de dépollution, issu d'un système de dépollution et arrivant au niveau d'un clapet de sécurité 8 et un quatrième conduit 9, dit conduit de mise à l'air libre, porté dans le cas de la figure 1 par le clapet de sécurité 8 mais pouvant être porté par le sommet de pipe 3.

Les conduits 5,6,9 et le clapet de sécurité 8 associés au conduit 7 assurent la ventilation du réservoir par la pipe 2 et son sommet 3.

Comme mieux visible sur la figure 1, le dispositif de remplissage ainsi constitué est prévu en deux parties, une partie inférieure 10, dite corps de remplissage, et une partie supérieure 11, dite tête de remplissage.

Pour ce faire, ces deux parties sont réunies l'une à l'autre de façon inamovible le long d'un plan de fixation 12.

Ainsi le corps 10 du dispositif de remplissage 1 comprend la partie inférieure des conduits de trop-plein, de dégazage, de mise à l'air libre, et la pipe de remplissage, ces différents conduits et pipe étant réunis les uns aux autres par des voiles 13 de façon à réaliser un ensemble monobloc jusqu'au plan de fixation 12.

La tête 11 du dispositif de remplissage 1 comporte le sommet de pipe 3, la partie supérieure des conduits de trop-plein, de dégazage, de mise à l'air libre et de dépollution ainsi que le clapet de sécurité, ces différents éléments étant élaborés d'une façon monobloc, par exemple par moulage de matière plastique.

Le corps 10 et la tête 11 présentent respectivement en vis-à-vis une embase 14 et 15 de manière à relier le corps et la tête d'une façon inamovible.

L'embase 15 comporte dans son corps un passage 15' assurant la communication entre les parties inférieure et supérieure du conduit 7.

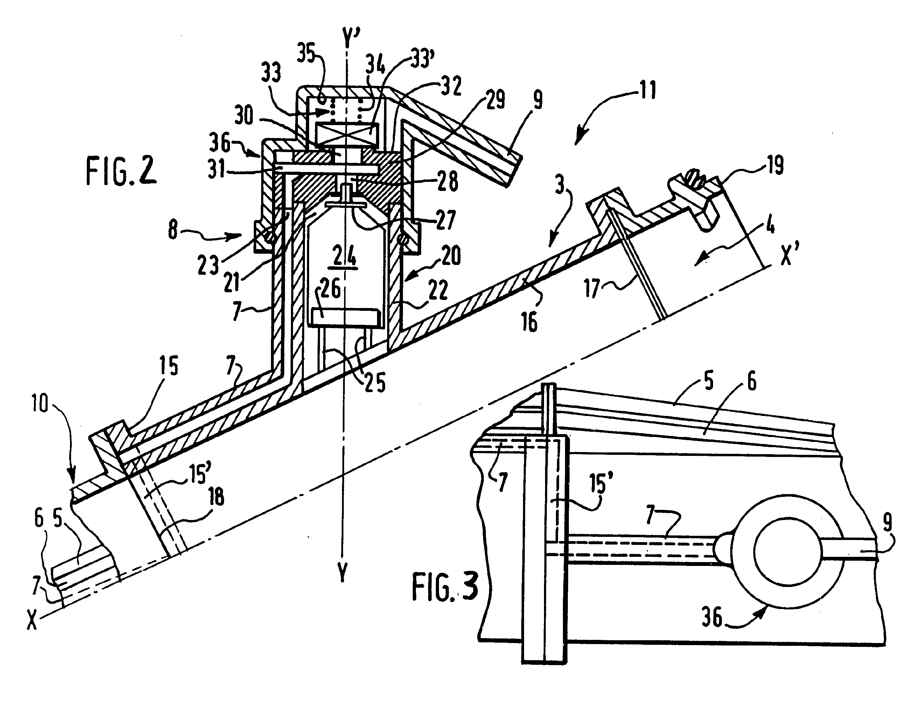

On se réfère maintenant aux figures 2 et 3 qui montrent la tête de remplissage 11 et plus particulièrement la partie concernant le clapet de sécurité 8.

Comme mieux visible sur cette figure, la tête de remplissage 11 présente un sommet de pipe 3 constitué d'une paroi circulaire 16 à fonds 17,18 ouverts de manière à former un volume cylindrique sur lequel est rapportée, à partir du fond 17, une embase de fixation 19 d'un bouchon de réservoir (non représenté) et apte à obturer l'ouverture 4 que présente cette embase. A partir du fond 18 de ce volume cylindrique comportant l'embase 15 précédemment décrite et comportant le passage 15'est rapporté le corps 10 du dispositif de remplissage de façon à assurer une continuité dans les deux pièces ainsi reliées et entre les parties inférieures des conduits 5,6,7 et leurs parties supérieures.

Le clapet de sécurité 8 s'érige à partir de la paroi 16, son axe YY' faisant un angle non nul avec l'axe XX' général de la tête 11, et est constitué d'un fourreau cylindrique 20 débouchant, par sa partie inférieure, dans le volume intérieur délimité par la paroi 16 en présentant un fond ouvert 21 à son autre extrémité.

D'une façon monobloc, la partie supérieure du conduit de dépollution 7 est prévue le long de la paroi 16 et se poursuit le long de la paroi externe 22 du fourreau 20 en présentant une extrémité débouchante 23 au même niveau que celui du fond 21 que présente le fourreau, l'autre extrémité de la partie supérieure du conduit 7 se poursuivant en direction de l'embase 15 pour être en communication avec sa partie inférieure.

Comme déjà décrit dans le document EP-A-0 336 788 (FR-A-2 628 368), un organe d'obturation 24 est disposé à l'intérieur du fourreau 20 en reposant sur des butées en translation 25 disposées au voisinage de l'intersection du fourreau 20 avec la paroi cylindrique 16 de la pipe 3 de manière à empêcher une éventuelle chute de cet organe d'obturation à l'intérieur du volume de la tête 11.

Cet organe d'obturation est muni d'un flotteur 26 et d'une portée d'obturation 27 apte à fermer un orifice 28 prévu sur un siège 29.

Bien entendu, et cela sans sortir du cadre de l'invention, l'organe d'obturation 24 peut être uniquement commandé par un moyen de tarage, tel qu'une bille prévue sur des rampes ou un ressort taré.

Ce siège 29 est disposé concentriquement avec le fourreau 20 en reposant sur l'ouverture 21 que présente ce fourreau et l'extrémité 23 du conduit de dépollution 7.

Ce siège comporte, dans son corps, l'orifice 28 concentrique au flotteur 20, un deuxième orifice 30 concentrique à l'orifice 28 et un passage d'évacuation 31 apte à mettre en communication l'orifice 28 ou l'orifice 30 avec le conduit de dépollution 7 par son extrémité débouchante 23.

A partir de la face 32 du siège 29 opposée à celle portant sur les ouvertures 21 et 23 s'appuie un clapet de secours 33 constitué d'un obturateur 33'taré à la surpression/dépression par un ressort 34 et emprisonné entre cette face 32 et le fond 35 d'un chapeau 36 venant coiffer le siège 29 et en partie le fourreau 20 en étant lié à ces parties de manière inamovible et étanche.

Ce chapeau 36 porte à partir de sa périphérie un passage de mise à l'air libre constitué ici par le conduit de mise à l'air libre 9 mettant en communication le volume délimité par le fond 35 du chapeau 36 et la face 32 du siège 29 avec l'atmosphère.

Le fonctionnement du dispositif de ventilation du réservoir de remplissage tel que représenté sur cette figure est le suivant:

Un bouchon de fermeture étant rapporté sur l'ouverture 4, en cas de remontée du carburant à l'intérieur du sommet de pipe 3, le liquide vient porter sur le flotteur 26 et sous l'action de ce liquide l'organe d'obturation 24 a un mouvement de translation vers le haut selon l'axe YY' du clapet de sécurité 8 et vient obturer l'orifice 28 en empêchant l'éventuel passage de liquide vers le conduit de dépollution 7.

En cas de dépression ou de surpression à l'intérieur du réservoir l'admission ou la sortie d'air extérieur se fera par le conduit 7, le passage 31 et l'orifice 28 du clapet 8 ainsi que la dépollution des vapeurs d'essence émanant du réservoir.

Dans le cas où le conduit de dépollution 7 est obturé par une impureté, et que subsiste une surpression ou une dépression à l'intérieur de la tête de pipe 3, le flotteur étant en appui sur les butées 25 en libérant ainsi l'orifice 28, le phénomène de dépression-surpression ne peut pas être pallié par la sortie ou l'admission d'air extérieur via le conduit 7, de même les vapeurs d'essence ne peuvent être évacuées vers ce conduit et entraînent de ce fait une surpression à l'intérieur du réservoir, ces phénomènes pouvant occasionner de graves dommages audit réservoir.

Dans ce cas, l'obturateur 33' du clapet 33 s'ouvre, en libérant l'orifice 30, et l'air extérieur circule par le conduit de mise à l'air libre 9, les orifices 30 et 28 et relie l'intérieur du sommet de pipe 3 avec l'atmosphère et remédie à la surpression ou à la dépression dans le réservoir et éventuellement assure l'évacuation des vapeurs d'essence.

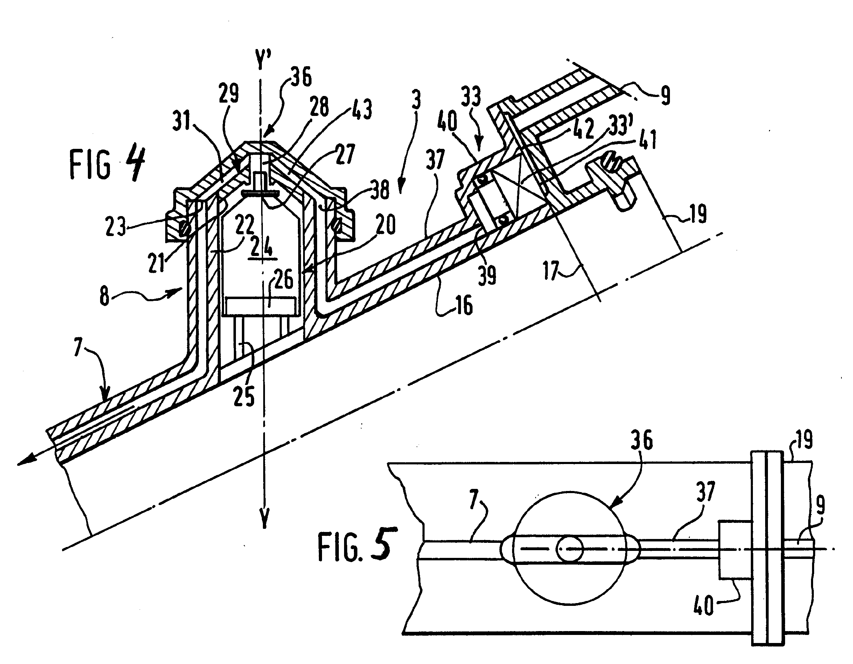

On se réfère maintentant aux figures 4 et 5, qui comportent sensiblement les mêmes éléments essentiels que ceux des figures 2 et 3 et qui pour ce faire seront référencées de la même manière.

Comme précédemment décrit, le sommet de pipe 3 comporte donc un clapet de sécurité 8 sous la forme d'un fourreau 20 avec un fond ouvert 21, un conduit de dépollution 7 courant le long du sommet de pipe 3 et du fourreau 20 en présentant une extrémité débouchante 23, un organe d'obturation 24 disposé à l'intérieur du fourreau 20 et s'appuyant sur des butées 25 en étant muni d'un flotteur 26 et d'une portée d'obturation 27 apte à coopérer avec un orifice 28 porté par un siège 29 et un passage de communication 31 reliant cet orifice 28 à l'extrémité débouchante 23 du conduit de dépollution 7.

Dans le cas de cette variante, il est prévu un conduit supplémentaire 37 monobloc avec la paroi 16, et dont une première partie court le long de ladite paroi et dont l'autre partie court le long de la paroi 22 du fourreau 20 en présentant une extrémité débouchante 38 au même niveau que l'ouverture 21 du fourreau, ce conduit 37 étant situé symétriquement au conduit 7 par rapport à l'axe YY' du clapet 8.

L'autre extrémité 39 de ce conduit supplémentaire aboutit à un clapet de secours 33 muni d'un obturateur 33' taré à la surpression/dépression et présentant un carter 40 de forme sensiblement cylindrique, également monobloc avec la paroi 16 et dont l'un des fonds est en communication avec l'extrémité 39 du conduit supplémentaire 37 et dont l'autre fond 41 est confondu avec le plan du fond 17 que présente le sommet de pipe 3.

Sur cette ouverture 17 et cette extrémité ouverte 41 est rapportée une embase 19, décrite précédemment mais qui comporte dans ce cas un passage de mise à l'air libre constitué ici par un conduit de mise à l'air libre 9 débouchant dans un passage de communication 42 permettant de relier le conduit de mise à l'air libre 9 avec le clapet de secours 33.

Sur le fond ouvert 21 du fourreau 20 du clapet 8 est rapporté de manière fixe et étanche un chapeau 36 qui porte dans son corps l'orifice 28 précédemment décrit, ce chapeau constituant de plus le siège 29 de l'organe d'obturation 24 ; l'orifice 28 est en en communication par le passage de communication 31 précédemment décrit avec le conduit 7 et par un passage de communication supplémentaire 43 avec le conduit supplémentaire 37.

Le fonctionnement de ce clapet de secours et de ce clapet de sécurité est sensiblement identique à celui précédemment décrit, l'organe 24 permettant d'obturer l'orifice 28 en cas de refoulement du carburant à l'intérieur du sommet de pipe 3 tout en rémédiant aux phénomènes de dépollution et de surpression/dépression à l'intérieur du réservoir par le conduit de dépollution 7.

Dans le cas de cette variante, si le conduit de dépollution 7 est obstrué par une impureté, l'admission ou la sortie d'air extérieur, pour remédier au phénomène de surpression/dépression à l'intérieur du réservoir ainsi qu'à l'évacuation des vapeurs d'essence, se fera par le conduit de mise à l'air libre 9, le clapet de sécurité 33, le conduit supplémentaire 37, le passage de communication 43, l'orifice 28 et l'intérieur du sommet de pipe 3.

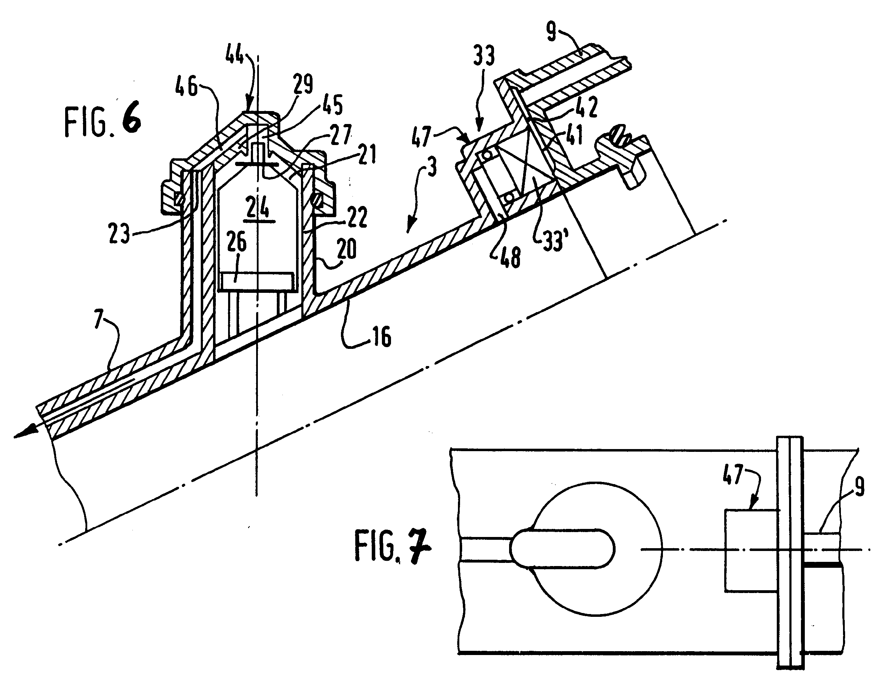

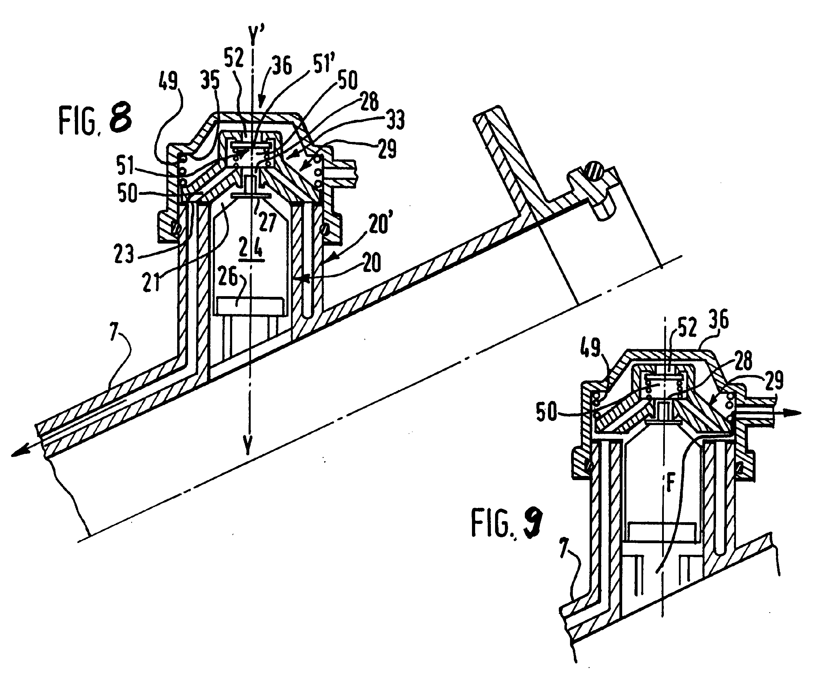

On se réfère maintenant aux figures 6 et 7 qui comportent également les mêmes éléments essentiels que décrits précédemment et de ce fait comporteront également les mêmes références.

Dans cette variante le sommet de pipe 3 porte donc un fourreau 20 comme précédemment décrit, un organe d'obturation 24 avec son flotteur 26 et sa portée d'obturation 27, la partie supérieure du conduit de dépollution 7 courant le long de la paroi 16 du sommet de pipe 3 et le long de la paroi 22 du fourreau 20 en présentant une extrémité débouchante 23.

Dans cette variante, le siège 29 du clapet 8 se présente sous la forme d'un chapeau 44 venant coiffer, de manière fixe et étanche, l'ouverture 21 et l'extrémité débouchante 23, ce chapeau présentant dans son fond un orifice 45 non débouchant à une extrémité concentrique à l'organe d'obturation 24 et communiquant par-l'extrémité non débouchante avec un passage 46 reliant l'extrémité débouchante 23 du conduit de dépollution 7 avec l'orifice 45 et dont l'autre extrémité de l'organe 45 est ouverte en direction de l'organe 24.

Le clapet de secours 33 comporte un obturateur 33' répondant à la surpression/dépression et logé dans un carter 47 de forme générale cylindrique présentant à l'une de ses extrémités un passage de communication 48 avec l'intérieur du sommet de pipe 3 et une ouverture 41 disposée comme cela a eté décrit précédemment de manière à être en communication avec le conduit de mise à l'air libre 9 par un passage de communication 42.

Le fonctionnement de ce dispositif est le suivant :

Dans le cas de surpression ou de dépression dans le réservoir ou d'éventuels refoulements de carburant en direction de l'ouverture 4 ou de vapeurs d'essence, l'organe d'obturation 24 fonctionnera comme précédemment décrit.

Dans le cas où l'organe d'obturation 24 et plus particulièrement la portée 27 reste plaquée en fermant l'orifice 45 et en empêchant une éventuelle communication entre le conduit de dépollution 7 et l'intérieur du sommet de pipe 3 ou dans le cas où le conduit de dépollution est obturé, les surpressions et dépressions et/ou les vapeurs d'essence résidant dans le réservoir peuvent être évacuées par le clapet de secours 33 et cela par l'orifice 48 mettant en communication le conduit de mise à l'air libre 9 avec l'intérieur du sommet de pipe 3 et cela à travers ce clapet de secours.

On se réfère maintenant aux figures 8 et 9 qui montrent une troisième variante de réalisation de l'invention.

Dans cette variante le fourreau 20 porte comme déjà décrit un organe d'obturation 24 muni d'un flotteur 26 et d'une portée d'obturation 27, le conduit 7 court le long de la paroi 16 du sommet de pipe 3 et le long de la paroi 22 du fourreau 20 jusqu'à une extrémité débouchante 23.

Dans le cas de cette variante le siège 29 du clapet 8 porte l'orifice 28 et est rapporté de manière mobile sur le fond 21 et l'extrémité débouchante 23.

Le siège 29 est plaqué sur le fond 21 et l'extrémité 23 par l'intermédiaire d'un ressort 49 s'appuyant sur la périphérie dudit siège et sur le fond 35 du chapeau 36 venant coiffer ce siège en étant fixé de manière étanche sur la paroi 22 du fourreau 20 et la paroi du conduit de dépollution 7, ce chapeau portant le conduit de mise à l'air libre 9 entre le siège 29 et le fond 35.

En pratique comme mieux visible sur les figures 8, 9, le fourreau 20 est concentriquement entouré à distance par un deuxième fourreau 20' issu également de la paroi 16 et présentant une ouverture confondue avec le plan de l'ouverture 21 du fourreau 20, l'espace entre les deux fourreaux étant relié à la partie du conduit 7 courant le long de la paroi 16, l'ouverture supérieure de cet espace, confondue également avec le plan de l'ouverture 21 du fourreau 20, constituant l'extrémité débouchante 23 de la partie supérieure du conduit 7.

Le chapeau 36 présente donc une forme circulaire permettant de coiffer le clapet 8 en étant fixé de manière étanche sur la paroi du fourreau 20'.

Le siège 29 présente un premier orifice 28 concentrique à l'organe d'obturation 24, ce premier orifice se poursuivant par un évidement 50 portant un clapet de dépression 51 muni d'un obturateur 51' d'un orifice 52 apte à mettre en communication cet évidement 50 avec l'air extérieur par le conduit de mise à l'air libre 9.

De plus, le siège présente un passage de communication 31 entre l'évidement 50 et l'extrémité débouchante 23, ici annulaire, du conduit de dépollution 7.

En pratique, le siège 29 associé au clapet de dépression 51 constitue le clapet de secours 33 taré à la surpression/dépression.

Le fonctionnement de cette variante ne sera explicité maintenant que dans le cas où le conduit de dépollution 7 est obstrué et/ou que l'organe d'obturation 24 est plaqué contre l'orifice 28 en obturant celui-ci.

Dans le cas d'une surpression dans le réservoir de carburant, la pression résidant dans le fourreau 20 sera telle qu'elle exercera une poussée sur le siège 29 en soulevant ce dernier vers le haut à l'encontre du ressort 49, en considérant le figure 9, et de ce fait autorisera l'air à circuler en direction du conduit de mise à l'air libre comme représenté sur la figure 9 par la flèche F et en direction du conduit de dépollution 7 si celui-ci n'est pas obstrué.

Par contre, dans le cas où le conduit de dépollution est obturé et que l'organe d'obturation 24 repose sur ses butées 25 en entourant l'orifice 28 et qu'il subsiste dans le réservoir de carburant une dépression, le clapet de dépression 51 sera actionné et admettra ainsi de l'air extérieur par le conduit de mise à l'air libre 9, l'orifice 52, l'évidement 50 et l'orifice 28 à l'intérieur du sommet de pipe 3.

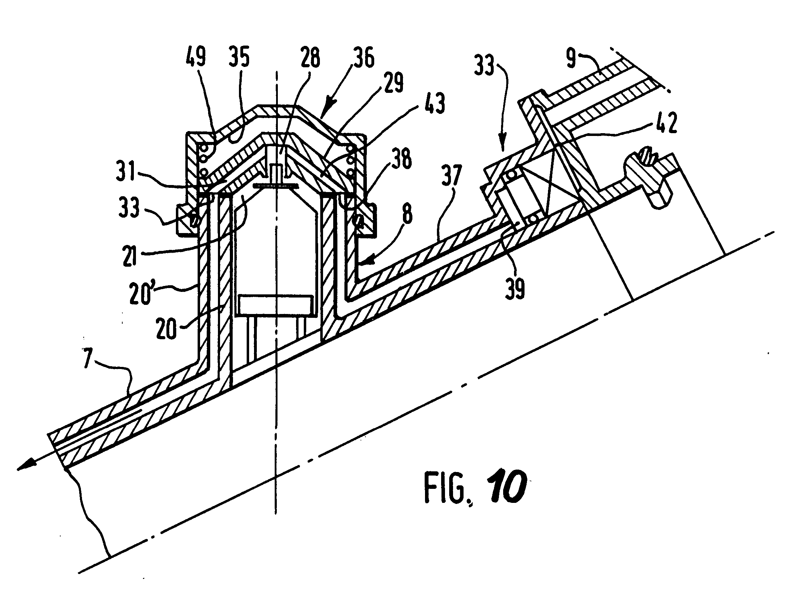

La variante de la figure 10 est une combinaison des figures 4, 5 avec les figures 8, 9.

Dans cette variante, le sommet de pipe 3 porte le clapet 8, l'extrémité du conduit de dépollution 7, le conduit supplémentaire 37 comme décrit précédemment, le clapet de secours 33 et le conduit de mise à l'air libre 9 selon les figures 4, 5.

Comme montré dans cette variante, le siège 29 du clapet 8 porte un orifice 28 non débouchant à une extrémité et repose de manière étanche sur le fond 21 et les extrémités débouchantes 33, 38 des conduits 7 et 37 en étant maintenu en appui par un ressort 49 s'appuyant sur la périphérie du siège 29 et sur le fond 35 du chapeau 36 qui enveloppe l'extrémité du fourreau 20 et les conduits 37 et 7.

Bien entendu, comme précédemment mentionné, le fourreau 20 peut être entouré par un fourreau 20' en créant un espace circulaire raccordé aux parties des conduits 7 et 37 courant le long de la paroi 16.

Le siège 29 ne comporte qu'un seul orifice 28 mis en communication par un passage 31 avec le conduit 7 et par un passage 43 avec le conduit supplémentaire 37.

Lors du fonctionnement, en cas de surpression/dépression dans le réservoir, et si le conduit de dépollution 7 est obturé, de l'air sera admis ou expulsé en passant par le conduit de mise à l'air libre 9, le passage de communication 42, le clapet de sécurité 33, l'extrémité 39, le conduit supplémentaire 37, le passage de communication 43 et l'orifice 28.

De plus, si la portée d'obturation 27 reste plaquée en obturant l'orifice 28, une éventuelle surpression dans le réservoir entraînera un soulèvement du siège 29 et une évacuation de cette surpression vers le conduit supplémentaire 37 menant au clapet de secours 33 taré à la surpression/dépression.

Dans l'exemple de cette variante, le rôle premier du clapet de secours 33 est remplacé par le siège 29 formant clapet de secours à la surpression.

En se référant aux figures 11 et 12, le fourreau 20 présente au niveau de son fond 21 une paroi sommitale 53 portant l'orifice 28 concentrique avec l'organe d'obturation 24.

Au-delà de cette paroi 53, et cela de façon monobloc, s'érige un clapet de secours 33 présentant un carter 59 de forme générale cylindrique disposé orthogonalement à l'axe YY' du clapet 8, ledit carter présentant une paroi de fond 60 et une extrémité ouverte 61.

A l'intérieur de ce carter 59 est logé un premier bouchon creux 62 de section en forme de U et de forme complémentaire à la forme interne du carter et présentant un fond 63 disposé à distance du fond 60 grâce à des protubérances 64, ce fond se poursuivant en direction de l'ouverture 61 par une paroi latérale 65 à distance radiale de la paroi latérale du carter 59 de manière à créer un passage libre 66 déterminé par l'espace libre entre les fonds 60,63 et l'espace libre entre les parois latérales du bouchon 62 et du carter 59.

Ce passage 66 est fermé à étanchéité, en direction de l'extrémité ouverte 61, par une collerette radiale externe 67 issue de la paroi latérale 65 et s'appuyant sur la paroi interne du carter 59 et sur un joint d'étanchéité 68.

Comme mieux visible aux figures 11 et 12, le passage 66 est en communication d'une part avec le conduit de dépollution 7 par un orifice prévu dans la paroi de fond 60 du carter 59 et d'autre part avec l'intérieur du fourreau 20 par l'orifice 28.

De manière concentrique, est rapporté dans le prolongement du premier bouchon 62, un deuxième bouchon creux 69 s'appuyant sur la collerette 67 du bouchon 62 par son fond 70, ce fond présentant en section une forme de "S" inversé, en créant un espace libre 71 entre le fond du bouchon 62 et le fond 70 du bouchon 69.

Le bouchon 69 porte, dans le creux du S, un clapet de surpression 72 et un clapet de dépression 73.

Le bouchon 69 présente, en direction de l'extrémité ouverte 61, une paroi latérale 74 disposée à distance de la paroi latérale du carter 59 en permettant de créer un passage libre 75 délimité d'une part par ces deux parois latérales et d'autre part par la collerette du bouchon 62 et une collerette 76 portée par la paroi latérale 74 du second bouchon 69 en assurant l'étanchéité du passage 75 par l'intermédiaire d'un joint d'étanchéité.

Ce passage 75 est en communication d'une part avec l'intérieur du fourreau 20 par un orifice 77 prévu dans la paroi sommitale 53 dudit fourreau et en regard dudit passage et d'autre part avec l'espace 71 entre les deux bouchons 62,70 par un orifice 78 prévu dans la paroi latérale 74 du bouchon 69.

Enfin un troisième bouchon 79, servant de bouchon de fermeture pour l'extrémité ouverte 61, est rapporté également concentriquement avec les deux autres de manière à fermer à étanchéité le carter 59, ce bouchon portant le conduit de mise à l'air libre 9 (figure 12).

Le fonctionnement de ce dispositif de ventilation de réservoir est le suivant :

En utilisation normale, les vapeurs d'essence et les surpressions/dépressions régnant à l'intérieur du réservoir sont évacuées par le clapet de sécurité 8 et le conduit de dépollution 7, cette évacuation s'effectuant par l'orifice 28, le passage 66 et le conduit de dépollution 7.

Dans le cas où la portée d'obturation 27 reste plaquée sur son siège en obturant l'orifice 28 les éventuelles vapeurs d'essence et les surpressions/dépressions régnant à l'intérieur du réservoir seront évacuées cette fois-ci par l'orifice 77, l'espace 75, l'orifice 78, l'espace 71, les clapets de supression/dépression 72,73 et le conduit de mise à l'air libre 9.

Dans le cas où le conduit de dépollution 7 est obturé l'évacuation des vapeurs d'essence et/ou les surpressions/dépressions à l'intérieur du réservoir seront évacuées de manière identique.

## Revendications

1. Dispositif de ventilation d'un réservoir de carburant, notamment pour véhicule automobile, comprenant une pipe de remplissage (2,3), un conduit de trop-plein (5), un conduit de dégazage (6), et un conduit de mise à l'air libre (9), caractérisé en ce qu'un clapet de sécurité (8) et un conduit de dépollution sont prévus, ainsi qu'un clapet de secours (29,33,51,57) pour pallier les surpressions ou dépressions provoquées par une défaillance du conduit de dépollution (7) afin d'assurer une ventilation du réservoir par l'intermédiaire du conduit de mise à l'air libre (9).

2. Dispositif de circuit de ventilation selon la revendication 1, caractérisé en ce que le clapet de secours (29,33,51,57) est en série avec le clapet de sécurité (8).

3. Dispositif de circuit de ventilation selon la revendication 1, caractérisé en ce que le clapet de secours (33) est en parallèle avec le clapet de sécurité (8).

4. Dispositif de circuit de ventilation selon la revendication 1, caractérisé en ce que le clapet de secours (29,33,51,57) est porté par le clapet de sécurité (8).

5. Dispositif de circuit de ventilation selon la revendication 1, caractérisé en ce que le clapet de secours (33) est porté par la pipe (2,3).

6. Dispositif de circuit de ventilation selon la revendication 5, caractérisé en ce que le clapet de secours (33) est relié au clapet de sécurité (8) par un conduit supplémentaire (37).

7. Dispositif de circuit de ventilation selon la revendication 4, caractérisé en ce que le clapet de secours (33) est en communication avec le clapet de sécurité (8) par un passage (78).

8. Dispositif de circuit de ventilation selon l'une des revendications précédentes, caractérisé en ce que le clapet de secours (33,57) est un clapet de dépression-surpression.

9. Dispositif de circuit de ventilation selon l'une des revendications précédentes, caractérisé en ce que le clapet de secours (33) est formé par le siège (29) du clapet de sécurité (8).

10. Dispositif de circuit de ventilation selon l'une des revendications précédentes, caractérisé en ce que le clapet de secours (33) est formé par un clapet de dépression (51) et le siège (29) du clapet de sécurité (8).

11. Dispositif de circuit de ventilation selon la revendication 10, caractérisé en ce que le clapet de dépression (51) est porté par le siège (29) du clapet de sécurité (8).

12. Dispositif de circuit de ventilation selon l'une des revendications précédentes, caractérisé en ce que le clapet de secours (57) est logé à l'intérieur de l'organe d'obturation (24) faisant partie du clapet de sécurité (8).

13. Dispositif de circuit de ventilation selon l'une des revendications précédentes, caractérisé en ce que le clapet de sécurité (8), le clapet de secours (29,33,51,57), une portion du conduit de trop-plein (5), une portion du conduit de dégazage (6), une portion du conduit de dépollution (7) et/ou le conduit de mise à l'air libre (9) sont portés par le sommet de pipe (3) en formant un ensemble monobloc constituant une tête de remplissage (11).

14. Dispositif de circuit de ventilation selon l'une des revendications précédentes, caractérisé en ce qu'une portion du conduit de trop-plein (5), une portion du conduit de dégazage (6) et une portion du conduit de dépollution (7) sont réunies les unes aux autres avec la pipe de remplissage (2) en formant un ensemble monobloc constituant un corps de remplissage (10).

15. Dispositif de circuit de ventilation selon l'une des revendications 1 à 13, caractérisé en ce qu'une portion du conduit de trop-plein (5), une portion du conduit de dégazage (6) sont reliées par des voiles (13) à la pipe de remplissage (2) en formant un ensemble monobloc constituant une tête de remplissage(11).

16. Dispositif de circuit de ventilation selon l'une des revendications précédentes, caractérisé en ce que la tête de remplissage (11) est reliée de manière inamovible avec le corps de remplissage (10) par l'intermédiaire d'embases (14,15).

## Claims

1. A venting system for a fuel tank, especially for a motor vehicle, comprising a filling pipe (2, 3), an overflow duct (5), a gas vent duct (6), and a fresh air duct (9), characterised in that a safety valve (8) and a scavenging duct are provided, together with an auxiliary valve (29, 33, 51, 57) for relieving over-pressure or under-pressure caused by failure of the scavenging duct (7), whereby to vent the reservoir through the fresh air duct (9).

2. A venting system according to Claim 1, characterised in that the auxiliary valve (29, 33, 51, 57) is in series with the safety valve (8).

3. A venting system according to Claim 1, characterised in that the auxiliary valve (33) is in parallel with the safety valve (8).

4. A venting system according to Claim 1, characterised in that the auxiliary valve (29, 33, 51, 57) is carried by the safety valve (8).

5. A venting system according to Claim 1, characterised in that the auxiliary valve (33) is carried by the filling pipe (2, 3).

6. A venting system according to Claim 5, characterised in that the auxiliary valve (33) is connected with the safety valve (8) through a supplementary duct (37).

7. A venting system according to Claim 4, characterised in that the auxiliary valve (33) is in communication with the safety valve (8) through a passage (78).

8. A venting system according to one of the preceding Claims, characterised in that the auxiliary valve (33, 57) is an under-pressure and over-pressure relief valve.

9. A venting system according to one of the preceding Claims, characterised in that the auxiliary valve (33) is defined by the valve seat (29) of the safety valve (8).

10. A venting system according to one of the preceding Claims, characterised in that the auxiliary valve (33) is defined by an under-pressure relief valve (51) and the valve seat (29) of the safety valve (8).

11. A venting system according to Claim 10, characterised in that the under-pressure relief valve (51) is carried by the valve seat (29) of the safety valve (8).

12. A venting system according to one of the preceding Claims, characterised in that the auxiliary valve (57) is mounted within the obturating valve member (24) that forms part of the safety valve (8).

13. A venting system according to one of the preceding Claims, characterised in that the safety valve (8), the auxiliary valve (29, 33, 51, 57), a portion of the overflow duct (5), a portion of the gas vent duct (6), a portion of the scavenging duct (7), and/or the fresh air duct (9), are carried by the outer end of the filling pipe (3), forming a monobloc assembly which constitutes a filling head (11).

14. A venting system according to one of the preceding Claims, characterised in that a portion of the overflow duct (5), a portion of the gas vent duct (6) and a portion of the scavenging duct (7) are joined to each other and to the filling pipe (2) so as to form a monobloc assembly which constitutes a filling body (10).

15. A venting system according to one of Claims 1 to 13, characterised in that a portion of the overflow duct (5) and a portion of the gas vent duct (6) are joined to the filling pipe (2) by means of webs (13), so as to form a monobloc assembly which constitutes a filling head (11).

16. A venting system according to one of the preceding Claims, characterised in that the filling head (11) is joined in a non-removable manner to the filling body (10) by means of base portions (14, 15).

## Patentansprüche

1. Belüftungseinrichtung für einen Kraftstofftank, insbesondere für ein Kraftfahrzeug, enthaltend einen Einfüllstutzen (2, 3), eine Überlaufleitung (5), eine Entgasungsleitung (6) und eine Abführleitung (9), **dadurch gekennzeichnet,** daß eine Sicherheitsklappe (8) und eine Reinigungsleitung sowie eine Hilfsklappe (29, 33, 51, 57) vorgesehen sind, um die durch Ausfall der Reinigungsleitung (7) hervorgerufenen Über- oder Unterdrücke zu beseitigen und eine Belüftung des Tanks durch die Abführleitung (9) sicherzustellen.

2. Einrichtung für den Belüftungskreislauf nach Anspruch 1, **dadurch gekennzeichnet,** daß die Hilfsklappe (29, 33, 51, 57) mit der Sicherheitsklappe (8) in Reihe geschaltet ist.

3. Einrichtung für den Belüftungskreislauf nach Anspruch 1, **dadurch gekennzeichnet,** daß die Hilfsklappe (33) mit der Sicherheitsklappe (8) parallelgeschaltet ist.

4. Einrichtung für den Belüftungskreislauf nach Anspruch 1, **dadurch gekennzeichnet,** daß die Hilfsklappe (29, 33, 51, 57) auf der Sicherheitsklappe (8) aufliegt.

5. Einrichtung für den Belüftungskreislauf nach Anspruch 1, **dadurch gekennzeichnet,** daß die Hilfsklappe (33) auf dem Stutzen (2, 3) aufliegt.

6. Einrichtung für den Belüftungskreislauf nach Anspruch 5, **dadurch gekennzeichnet,** daß die Hilfsklappe (33) mit der Sicherheitsklappe (8) über eine zusätzliche Leitung (37) verbunden ist.

7. Einrichtung für den Belüftungskreislauf nach Anspruch 4, **dadurch gekennzeichnet,** daß die Hilfsklappe (33) mit der Sicherheitsklappe (8) über einen Durchtritt (78) in Verbindung steht.

8. Einrichtung für den Belüftungskreislauf nach einem der vorherigen Ansprüche, **dadurch gekennzeichnet,** daß die Hilfsklappe (33, 57) eine Unterdruck-Überdruck-Klappe ist.

9. Einrichtung für den Belüftungskreislauf nach einem der vorherigen Ansprüche, **dadurch gekennzeichnet,** daß die Hilfsklappe (33) aus dem Sitz (29) der Sicherheitsklappe (8) besteht.

10. Einrichtung für den Belüftungskreislauf nach einem der vorherigen Ansprüche, **dadurch gekennzeichnet,** daß die Hilfsklappe (33) aus einer Unterdruckklappe (51) und dem Sitz (29) der Sicherheitsklappe (8) gebildet wird.

11. Einrichtung für den Belüftungskreislauf nach Anspruch 10, **dadurch gekennzeichnet,** daß die Unterdruckklappe (51) auf dem Sitz (29) der Sicherheitsklappe (8) aufliegt.

12. Einrichtung für den Belüftungskreislauf nach einem der vorherigen Ansprüche, **dadurch gekennzeichnet,** daß die Hilfsklappe (57) im Innern des zur Sicherheitsklappe (8) gehörenden Verschlußorgans (24) untergebracht ist.

13. Einrichtung für den Belüftungskreislauf nach einem der vorherigen Ansprüche, **dadurch gekennzeichnet,** daß die Sicherheitsklappe (8), die Hilfsklappe (29, 33, 51, 57), ein Teil der Überlaufleitung (5), ein Teil der Entgasungsleitung (6), ein Teil der Reinigungsleitung (7) und/oder die Abführleitung (9) auf dem Scheitel des Stutzens (3) aufliegen und dabei einen einzigen Block bilden der einen Einfüllkopf (11) bildet.

14. Einrichtung für den Belüftungskreislauf nach einem der vorherigen Ansprüche, **dadurch** **gekennzeichnet,** daß ein Teil der Überlaufleitung (5), ein Teil der Entgasungsleitung (6) und ein Teil der Reinigungsleitung (7) miteinander mit dem Einfüllstutzen (2) verbunden sind und dabei eine einzige Einheit bilden, die als Einfüllkörper (10) dient.

15. Einrichtung für den Belüftungskreislauf nach einem der Ansprüche 1 bis 13, **dadurch gekennzeichnet,** daß ein Teil der Überlaufleitung (5), ein Teil der Entgasungsleitung (6) über Flansche (13) mit dem Einfüllstutzen (2) verbunden sind und dabei eine einzige Einheit bilden, die als Einfüllkopf (11) dient.

16. Einrichtung für den Belüftungskreislauf nach einem der vorherigen Ansprüche, **dadurch gekennzeichnet,** daß der Einfüllkopf (11) über Befestigungsflächen (14, 15) fest mit dem Einfüllkörper (10) verbunden ist.
